# EUROPEAN PATENT APPLICATION

(11) **EP 4 826 140 A1**
(43) Date of publication of application: **21.10.2026**
(21) Application number: 25461520.6
(22) Date of filing: 18.04.2025
(51) Int. Cl.: C25D 17/06, B05B 5/08, B05B 13/02, B05C 13/00, B05C 19/04, B23K 11/00, B25J 15/00

(54) **METHOD OF SUSPENDING ELEMENTS ON THE TRANSPORT SYSTEM OF THE TECHNOLOGICAL LINE AND THE ROBOT GRIPPER USED IN THIS METHOD**

(71) Applicant: Otas P.S.A., 24-110 Pulawy (PL)
(72) Inventor: STANKIEWICZ, Maciej, 67-400 Wschowa (PL)
(74) Representative: JD&P Patent Attorneys Joanna Dargiewicz & Partners

(57) **Abstract**

The subject of the present invention is a method of suspending workpieces on a transport system of a technological line using a robot arm gripper, using electric resistance welding, a robot arm gripper, a technological painting line, a technological electroplating line and a technological anodising line.

## Description

The present invention relates to a method of suspending workpieces on a transport system of a technological line, such as an electroplating, anodising or painting line, as well as to a robot gripper used in this method.

### Background of the invention

### Electroplating and painting

In automated technological lines for electroplating, anodising and painting, the workpieces to be processed must first be suspended on a transport system. As a result, they are moved through successive stages of the process. In many cases, this is done without further human intervention.

In the case of painting lines, workpieces are continuously and slowly moved into chambers one by one, in which cleaning, drying, paint application and paint curing take place.

In electroplating and anodising lines, they are immersed, for a specific time, in baths filled with solutions that perform successive coating stages, depending on the process type.

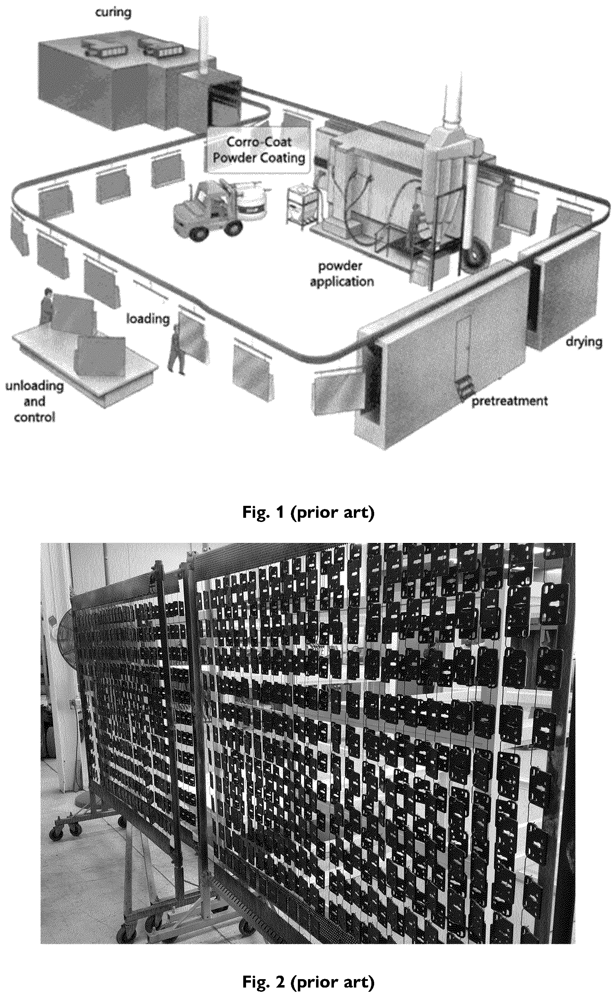

Fig. 1 shows an exemplary schematic of a painting line known from the state of art (https://www.chinapowdercoating.com/powder-coating-process/).

Depending on the size of the workpieces, they can be suspended directly on the transport system or first on a collective frame, most often equipped with a system of hooks or holes.

The workpieces should be suspended relatively freely (not rigidly) to allow for slight movements during the process. This ensures greater uniformity of the applied coating.

For this reason, the use of hangers in the form of wire bent on both sides into a hook shape is preferred.

Fig. 2 shows an example of a frame with suspended workpieces known from the state of the art (https://www.bcmmediablasting.com/powder-coating.html).

The wire diameter must be adapted to the weight of the workpiece. The wire is then hooked on one side to a hole prepared in the transport system or frame, and on the other side to a selected hole in the workpiece.

Sometimes, workpieces equipped with a suitable system of holes are suspended one below the other, forming chains consisting of workpieces connected with each other by short hangers.

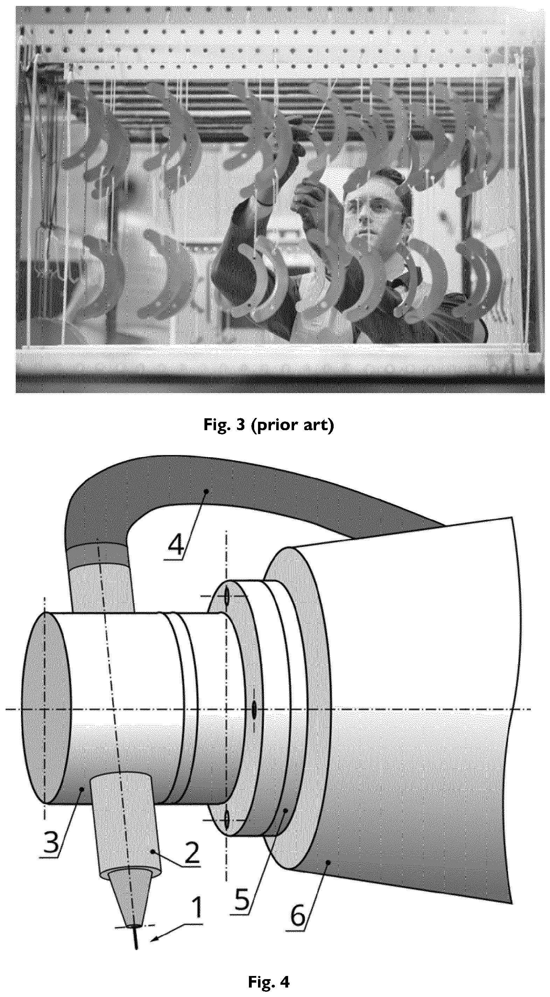

Fig. 3 shows an example of a multi-level suspension known from the state of the art (http://www.multiquick.co.uk/quality/).

In many cases, frames equipped with a system of rigid hooks are also used. Ability to move is then ensured by relatively large holes.

However, both cases require the presence of a hole of appropriate diameter in the workpiece's geometry. Special technological holes are often used for this purpose.

Both in electroplating processes (most of them) and in the case of powder coating processes, an additional requirement is the need to ensure free current flow through a workpiece.

Once the process is complete, the finished workpieces must be removed from the hungers. This operation often requires caution to avoid damaging the applied coating. This process is also manual in most plants worldwide.

### Hanging workpieces

In the vast majority of coating plants, the hanging process is manual. This situation occurs not only in Poland but also abroad. Automated/robotised hanging is still rare.

### Prior art

Document DE19927436A1 discloses a frame in which a flexible V-shaped or U-shaped body portion has two shanks. A recess in each shank has defining edges. Opposite the defining edges are pins. The clip can be bent to engage an object and released to secure it. The pins can be bent inwardly or downwardly from the top.

Document SE510709C3 discloses a device for supporting objects to be coated, comprising a plurality of suspension rails arranged one above the other and vertically connected by a connecting device, in which the objects are suspended, characterized in that the connecting device comprises a substantially rigid and straight rod and coupling elements which can be secured along the rod in optional positions which have positional engagement with the suspension rails.

Document US5267710A discloses an L-shaped clamp for rigidly securing a copper water pipe to a segment of a HYCO belt. The clamp has a pipe support portion with an opening for receiving a segment of copper water pipe therein. The clamp further has a strap support portion coupled to the pipe support portion for application to a side surface of a segment of the HYCO belt. At least one locating element extends from the pipe support portion for insertion into a preselected opening in the belt. A support portion extends at right angles from the side of the belt support portion opposite the pipe support portion. Collars that extend from the pipe support portion and springs that extend from the support portion engage opposite edges of the belt to hold the clamp in position. The clamp is preferably stamped from a single piece of sheet steel that is copper plated so that the copper water pipe can be soldered directly to the clamp.

Document CN219136993 discloses a device for hanging workpieces for electroplating that can be grasped by a robot, includes a hanger, a plating tank, and a cathode drive, the hanger is provided with a holder and a conductive seat, and the device for hanging workpieces for electroplating that can be grasped by a robot is characterized in that rotating rollers are arranged at the left end and the right end of the conductive seat; the left swing rod and the right swing rod of the cathode drive are provided with a wave-shaped clamp plate, the upper ends of the wave-shaped clamp plates are provided with a plurality of wave-shaped clamping grooves adapted to the rotating shaft, and the device for hanging electroplating parts further includes a stroke regulator with a movable part. And the hanging tool is controlled by the movable part to reset to the initial position at which the hanging tool is placed. The hanging tool is reset in the mechanical mode, the robot can conveniently grasp the hanging tool, and the working process is stable.

Document CN218491882 relates to a fully automatic hanging machine for an aluminum shell. The fully automatic hanging machine includes a stand, a vibrating feeding disk, a front sliding frame of the hanging tool and a rear sliding frame of the hanging tool. apparatus further includes a feeding mechanism, a lifting mechanism, a swinging mechanism, a clamping mechanism, a hanger translation mechanism and a hanger positioning mechanism. The feeding mechanism, the lifting material placement mechanism, the holding and clamping mechanism and the hanging tool translation mechanism are located on the upper end face of the stand, the vibrating feeding disk is connected to the lifting material placement mechanism via the feeding mechanism, the lifting material placement mechanism is located between the front sliding frame of the hanging tool and the rear sliding frame of the hanging tool, and the holding and clamping mechanism is located below the lifting material placement mechanism; the hanger translation mechanisms are located on the two sides of the rear sliding frame of the hanger, and the hanger positioning mechanisms are located on the hanger translation mechanisms. According to the technical diagram, the hanging tool can be automatically transported, and the aluminum workpiece for electroplating is placed on the V-shaped clamp of the hanging tool; and compared with the six-axis robot, the stroke is short, the whole row is fed each time, the feeding speed is increased, and the time needed is shortened.

Document US2009039232 discloses an apparatus for connecting a part to a body for an online painting process, which may include a plastic adapter and a metal hanger. The plastic adapter may be configured to be connected to the part being painted, and the metal hanger may be releasably connected to the plastic adapter. The metal hanger may be configured to be connected to the body being painted.

The inventors of the present invention have developed a universal, robotic workstation for hanging small workpieces. This workstation is intended to be an alternative to manual hanging, also available for relatively small production batches.

Hanging operation robotisation requires adapting many aspects of the process. Only if the design of the frame and the hangers themselves are adapted will the robotic system be able to match the efficiency of manual hanging.

### Problems related to the use of hooks

The use of hangers requires the availability of holes on which the workpiece can be suspended. In the case of insufficient hole size or inability to properly thread the wire in the contact area, coating defects may occur. This results either from the physical blocking of powder access to the workpiece surface or the disruption of the current density in the electroplating bath.

Also, the use of hooks that are too shallow or chains that are too long can cause them to fall off. This occurs both during shocks resulting from the operation of the transport system (sudden starting, stopping, jumps, swaying) as well as during immersion in the bath (resistance during immersion, turbulence, gas bubble streams, gas accumulation).

On the other hand, using deep hooks makes hanging and removal difficult.

In addition, it is necessary to ensure that the current flows through the hook-workpiece connection in a way that does not cause burns.

Hooks made of wire can additionally cause injuries. This can happen during manual workpiece hanging.

### Using hooks in robotic hanging

The operation of hanging a workpiece on a hook through a through-hole is not a problem for a fully able-bodied person. The mobility of human limbs allows for efficient hanging of workpieces. However, in the case of using a robot, which typically has only a few degrees of freedom, hanging workpieces is a complex and time-consuming operation.

Even small deviations in the shape of the hook can completely prevent the workpiece from hanging correctly and may damage the workpiece, transport system or frame.

Furthermore, it is practically impossible to robotise the process of connecting multiple workpieces into a single hanging chain.

For this reason, in the context of robotising the hanging process, it is advisable to develop alternative workpiece placement and fastening methods.

Since each contact point of the hanger with the workpiece causes a coating defect (underpainting or uneven thickness), shape connections, latches, and similar fasteners often cannot be used as a replacement for hooks.

### Summary of the invention

Therefore, the present invention relates to a method of suspending elements on a transport system of a technological line using a robot arm gripper, comprising the steps of:
- the robot arm gripper, in order to pick up a workpiece, places a tip of a wire or a pre-shaped hanger to a selected location on the workpiece,
- then a voltage is applied to the wire or the pre-shaped hanger, wherein the workpiece is simultaneously connected to ground to provide a current flow for electric resistance welding the wire or the pre-shaped hanger to the workpiece, and then
- the robot arm lifts the workpiece and resistance welds the workpiece to a frame on the transport system of the technological line.

Preferably, after electric resistance welding the wire, the robot arm lifts the workpiece, the appropriate length of the wire is measured by means of a feeder, the wire is resistance welded to the frame on the transport system of the technological line and its tip is cut off.

Preferably, a pre-shaped hanger (11) is used, caught between fingers (12, 13) of a parallel gripper (15).

Another subject of the invention is a robot arm gripper comprising an element for feeding the material forming a hanger, and a voltage supply wire for electric resistance welding the suspended workpiece to a frame on the transport system of the technological line.

Preferably, the material forming the hanger is a wire.

Preferably, the material forming the hanger is a pre-shaped hanger.

Another subject of the invention is a technological painting line comprising:
- a loading station
- a powder or paint application station
- a curing or drying station, and
- an unloading station,
wherein the loading station is equipped with the robot arm gripper as defined above for electric resistance welding the workpiece to the frame on the transport system.

Preferably, it additionally comprises, after the loading station, a pre-treatment station comprising preparatory processes, including drying.

Another subject of the invention is a technological electroplating line comprising:
- a loading station
- a sequence of tanks filled with reagents appropriate for the technological electroplating process being performed
- an unloading station
wherein the loading station is equipped with the robot arm gripper as defined above for electrical resistance welding the workpiece to the frame on the transport system.

Preferably, it additionally comprises a pre-treatment station after the loading station, comprising preparatory processes, including drying.

Another subject of the invention is a technological anodising line comprising:
- a loading station
- a sequence of tanks filled with reagents appropriate for the technological anodising process being performed
- an unloading station
wherein the loading station is equipped with a robot arm gripper as defined in claim 5 or 6 for electric resistance welding the workpiece to the frame on the transport system.

Preferably, it additionally comprises a pre-treatment station after the loading station, comprising preparatory processes, including drying.

### Welded hangers

The basis of this invention is the use of electric resistance welding to temporarily connect a hanger to a workpiece undergoing processing. In such a solution, the hanger is made of a wire bent on one side into the shape of a hook. On the other side, it is rigidly connected to the workpiece by means of a weld.

The welding parameters are selected to provide the required strength adapted to the mass of the workpiece/workpieces, with the smallest possible weld surface and the smallest possible heat-affected zone.

The hook-shaped side is used to suspend the workpiece on a transport system or a collective frame. In this case, the hook can be replaced with any fastener that allows for attachment to a frame, transport system or another workpiece-hanger assembly (to form a chain). The method of connecting the workpiece-hanger assembly to the remaining elements of the process is not the subject of the invention.

Once the coating application process is complete and the workpiece is removed from the transport system, the hangers are removed by cutting or breaking them off.

The weld location must be selected so that it does not initiate corrosion and does not affect the aesthetics. Covers can also be used and/or an additional protective coating can be applied at this location.

Depending on the process, the hangers can be single-use or reusable.

The hanger can be welded to the workpiece in a separate process or as one of the operations during hanging. The robot is then equipped with a conductive gripper, with which it takes the shaped hanger, places its end at the appropriate point on the workpiece and then applies current to perform the weld.

It is also possible to use a wire feeder that would be automatically cut to a given length after welding without shaping the hook.

The shape of the hanger must always be adapted to the process and is not the subject of the invention. It is also possible to use a wire feeder that would be automatically cut to a given length after welding without shaping the hook.

The shape of the hanger must in each case be adapted to the process and is not the subject of the invention.

### Application

The main application of such a solution is the robotisation of the hanging process. Heating the wire to the workpiece at a given point is easier from the point of view of robotisation than implementing a hook hanging motion while ensuring the appropriate cycle time.

The application of such a solution is not limited to robotic processes. The use of a hanger temporarily bonded to the workpiece can also be beneficial in the case of manual hanging, e.g. to limit mobility or to use hangers to place the workpiece on multiple transport systems.

### Advantages

- The workpieces connected in this way will not fall during transport or the process.
- Minimisation of the impact of the hanger itself on the coating process.
- More stable current flow.
- Possibility of using the hanger in multiple process stages.
- Easier robotisation.

### EXAMPLES

### Example 1

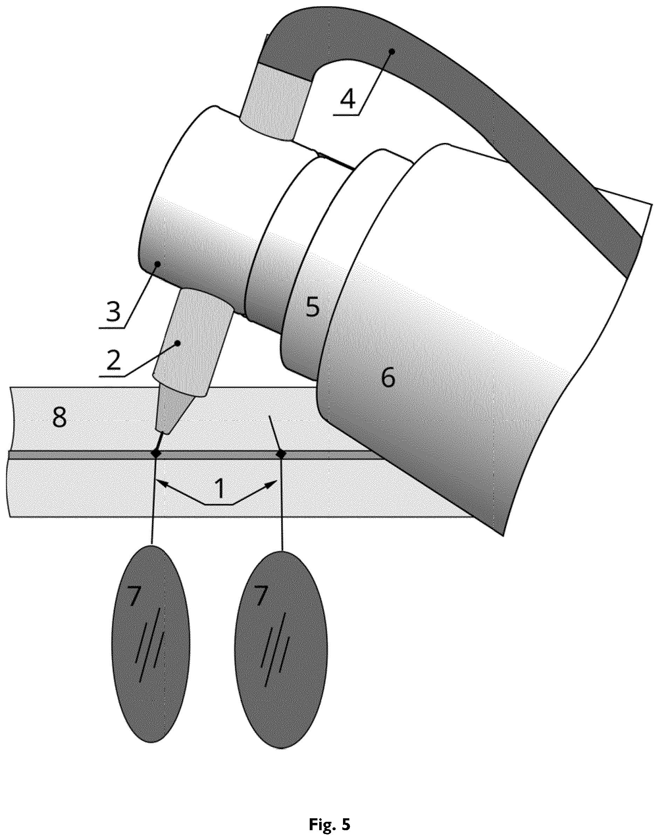

The robot is equipped with a special type of gripper consisting of a wire feeder with the equipment needed to weld it to the workpiece. A schematic image of the robot gripper is shown in Fig. 4 and Fig. 5, where the individual elements are marked as follows:
1. fed wire (which after welding to the element will constitute a hanger)
2. wire feeding end
3. electrically insulating fastening
4. wire through which the wire is fed and the voltage needed to weld it
5. robot flange
6. robot arm
7. suspended workpiece
8. frame.

In order to pick up a workpiece, the robot places the end of the wire (1) at the selected location on the workpiece (7), and then voltage is applied to the wire. At this time, the workpiece must be connected to ground to ensure current flow. After welding the wire, the robot can lift the workpiece, because it is then connected to the wire. The feeder can then measure the correct length of wire (1). The wire will then constitute a hanger. After measuring, the wire can be welded to the frame (8) and cut off the tip. The wire (hanger) is then connected to the workpiece (7) on one side and to the frame element (8) on the other.

### Example 2

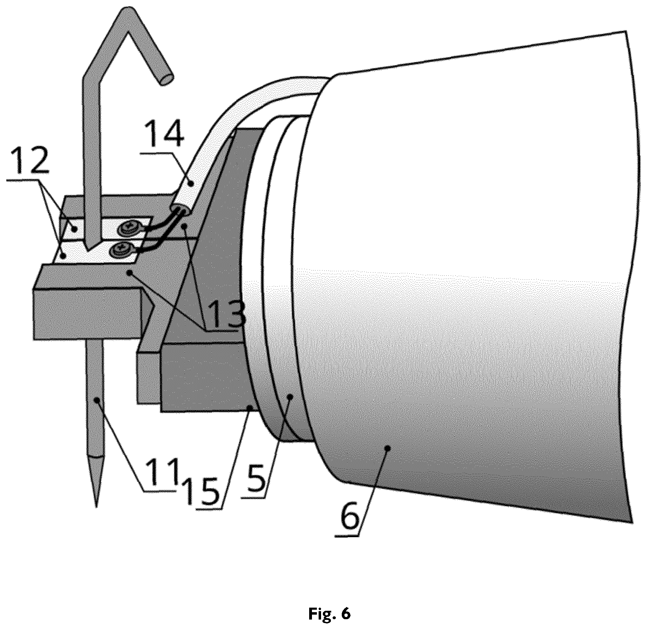

The second example of the robot gripper is shown in Fig. 6. This gripper uses a pre-shaped and picked-up hanger (11) caught between the fingers (12, 13) of the parallel gripper (15). The tip of the hanger is then placed at a selected location on the workpiece, after which a voltage is applied to the hanger through the conductive elements (contacts) of the gripper fingers (12). At this time, the workpiece must be connected to ground in order to ensure current flow. As a result of applying the voltage, the hanger is welded to the workpiece. The robot can then move the workpiece-hanger assembly and hook it onto the frame element. The individual elements of the robot gripper shown in Fig. 6 are marked as follows:
11. pre-shaped hanger
12. conductive elements of the gripper fingers
13. insulating elements of the gripper fingers
14. voltage supply wire
15. parallel gripper mechanism
5. robot flange 11.

## Claims

1. A method of suspending elements on a transport system of a technological line using a robot arm gripper, comprising the steps of:
- the robot arm gripper, in order to pick up a workpiece (7), places a tip of a wire (1) or a pre-shaped hanger (11) to a selected location on the workpiece (7),
- then a voltage is applied to the wire (1) or the pre-shaped hanger (11), wherein the workpiece (7) is simultaneously connected to ground to provide a current flow for electric resistance welding the wire (1) or the pre-shaped hanger (11) to the workpiece (7), and then
- the robot arm lifts the workpiece (7) and resistance welds the workpiece (7) to a frame (8) on the transport system of the technological line.

2. The method according to claim 1, wherein, after electric resistance welding the wire (1), the robot arm lifts the workpiece (7), the appropriate length of the wire (1) is measured by means of a feeder, the wire (1) is resistance welded to the frame (8) on the transport system of the technological line and its tip is cut off.

3. The method according to claim 1, wherein a pre-shaped hanger (11) is used, caught between fingers (12, 13) of a parallel gripper (15).

4. A robot arm gripper comprising an element for feeding the material forming a hanger (1) and (11), and a voltage supply wire (4) for electric resistance welding the suspended workpiece (7) to a frame (8) on the transport system of the technological line.

5. The robot arm gripper according to claim 4, wherein the material forming the hanger is a wire (1).

6. The robot arm gripper according to claim 4, wherein the material forming the hanger is a pre-shaped hanger (11).

7. A technological painting line comprising:
- a loading station
- a powder or paint application station
- a curing or drying station, and
- an unloading station,
wherein the loading station is equipped with the robot arm gripper as defined in claim 5 or 6 for electric resistance welding the workpiece (7) to the frame (8) on the transport system.

8. The technological painting line according to claim 7, **characterized in that** it additionally comprises, after the loading station, a pre-treatment station comprising preparatory processes, including drying.

9. A technological electroplating line comprising:
- a loading station
- a sequence of tanks filled with reagents appropriate for the technological electroplating process being performed
- an unloading station
wherein the loading station is equipped with the robot arm gripper as defined in claim 5 or 6 for electric resistance welding the workpiece (7) to the frame (8) on the transport system.

10. The technological electroplating line according to claim 9, **characterized in that** it additionally comprises a pre-treatment station after the loading station, comprising preparatory processes, including drying.

11. A technological anodising line comprising:
- a loading station
- a sequence of tanks filled with reagents appropriate for the technological anodising process being performed
- an unloading station
wherein the loading station is equipped with a robot arm gripper as defined in claim 5 or 6 for electric resistance welding the workpiece (7) to the frame (8) on the transport system.

12. The technological anodising line according to claim 11, **characterized in that** it additionally comprises a pre-treatment station after the loading station, comprising preparatory processes, including drying.
